# EUROPEAN PATENT SPECIFICATION

(11) **EP 0 928 442 B1**
(45) Date of publication and mention of the grant of the patent: **30.01.2002**
(21) Application number: 97941412.5
(22) Date of filing: 04.09.1997
(51) Int. Cl.: G05B 19/418

(54) **SYSTEM AND METHOD FOR PROVIDING MULTI-THREADED BUS ACCESS FOR DATA TRANSMISSION AND ACQUISITION IN A PROCESS CONTROL SYSTEM**
VERFAHREN UND SYSTEM FÜR MULTIFADENBUSZUGRIFF BEI DATENÜBERTRAGUNG UND -AUFNAHME IN EINEM PROZESSSTEUERUNGSSYSTEM
SYSTEME ET PROCEDE PERMETTANT D'ASSURER L'ACCES MULTIFILIERES A UN BUS POUR LA TRANSMISSION ET L'ACQUISITION DE DONNEES DANS UN SYSTEME DE COMMANDE DE PROCESSUS INDUSTRIEL

(30) Priority: 24.09.1996 US 719002
(43) Date of publication of application: 14.07.1999
(73) Proprietor: HONEYWELL INC., Minneapolis Minnesota 55408 (US)
(72) Inventor: STAGGS, Kevin, P., Peoria, AZ 85345 (US); CLOSE, Ian, Peoria, AZ 85381 (US); HUNTINGTON, James, Phoenix, AZ 85015 (US); LIN, Haur, Phoenix, AZ 85023 (US); JAMES, Anita, Phoenix, AZ 85023 (US); TRUONG, Steven, Phoenix, AZ 85022 (US)
(74) Representative: Powell, Timothy John
(86) International application number: US9715538
(87) International publication number: WO9813738

(56) References cited:
- EP-A- 0 153 856
- EP-A- 0 527 392
- EP-A- 0 528 396
- US-A- 5 333 298
- US-A- 5 386 503
- GEROLD J S: "HONEYWELL'S TOTALPLANT SOLUTION BLENDS OPEN WITH SECURE" CONTROL ENGINEERING INTERNATIONAL, May 1996, pages 42-44, 46, XP000593987
- HAJJAR M. N. ET AL: "LES OBJETS, AVENIR DU CONTROLE DE PROCEDES" MESURES REGULATION AUTOMATISME, vol. 60, no. 682, February 1996, pages 81-83, XP000556561
- G. Schnell: "Bussysteme in der Automatisierungstechnik", edition 2, 1996, Friedrich Vieweg & Sohn Verlagsgesellschaft mbH, Braunschweig/Wiesbaden, pages 217-219

## Description

The present invention is related to those disclosed in U.S. Patent No. 4,607,256 issued to Henzel on August 19, 1986, entitled "Plant Management System;" U.S. Patent No. 5,333,298 issued to Bland, et al., on July 26, 1994, entitled "System for Making Data Available to an Outside Software Package by Utilizing a Data File which Contains Source and Destination Information;" and U.S. Patent No. 5,386,503 issued to Staggs, et al., on January 31, 1995, entitled "Method for Controlling Window Displays in an Open Systems Environment.

### TECHNICAL FIELD OF THE INVENTION

The present invention is directed, in general, to computing systems and, more specifically, to a system and method, employable in a process control system environment, for providing multi-threaded bus access for data transmission and acquisition.

### BACKGROUND OF THE INVENTION

Automated plant control systems (*e.g.*, TDC 2000 Industrial Automation Systems manufactured by, and commercially available from, Honeywell Incorporated of Phoenix, Arizona) include a comprehensive set of algorithms and auxiliaries to control and monitor various processes within, for instance, a manufacturing facility. The control systems can be tailored to satisfy a wide range of process requirements globally or within specified portions of the facility. Conventionally, the control systems include a plurality of modules, each having its own processor and firmware, linked together by a communication bus thereby resulting in a distributed process control system. The distributed nature of the system affords high performance with the capability to expand the system incrementally to satisfy growth or modifications in the facility.

A first objective of automated plant management is to provide a control scheme that synthesizes plant-wide control of all processes therein to improve an overall efficiency of the facility. A second objective is to couple the control scheme to the facility by providing a real time data acquisition and monitoring scheme that monitors the operation of the facility by collecting historical and real time data and responding to deviations from desired operation that may arise.

Regarding the first objective, U.S. Patent No. 4,607,256 provides a plant-wide system for monitoring and controlling an industrial and electrical utility plant, including communication within the system and the related management of the processes within the plant. More specifically, the plant management system incorporates a "token-passing" arrangement employing separate modules of various types. A module transmits information to or receives information from another module located on a common bus. Each of the modules functions as a peer within the network and is assigned an individual network address. A token passed among the modules gives the module that possesses the token the right to access the bus and transmit a signal to the address of another module located on the bus. Automated control systems, such as the one disclosed in U.S. Patent No. 4,607,256, are well known in the art.

Regarding the second objective, it is critical to have timely, accurate information regarding the operational parameters of the facility to control the operation of the facility successfully. The data concerning the operational parameters to effect control may be divided into three categories. "Scan data" are periodically and routinely read by the data acquisition and monitoring subsystem. Scan data may be retrieved as actual values or deviations from previously-retrieved values. "Trend data" are historical data employed to assess trends in the operation of a particular parameter within the facility. Trend data can be recorded and retrieved for durations of time extending from, for instance, one minute to ninety-six hours. Because trend data cover a period of time, they are, by their nature, voluminous.

Accordingly, the processor of the data acquisition and monitoring subsystem and common bus of the control system may be occupied for prolonged periods of time when communicating trend data. The third category, "immediate data," are needed when demanded by the data acquisition and monitoring subsystem. Immediate data are bidirectional; the data acquisition and monitoring subsystem may make a special request for data or may issue a command to a module (such as a command to open a valve).

Unfortunately, given that a common bus -is used for data communication, the processors and busses within prior art data acquisition and monitoring subsystems have historically been limited to processing only one request at a time; other requests are thus obstructed and are required to wait their turn in queue. This is particularly problematical when the request that is waiting has a higher priority than the request being processed. For instance, if a request for trend data (which is rarely critical and, as described above, takes a relatively long time to be fulfilled) is issued first, a subsequent request for immediate data or command (which has a substantially higher priority) nonetheless is obstructed until the trend data request is fulfilled.

This obstruction may be detrimental to the operation of the facility. For instance, if a process within the facility is experiencing an emergency requiring immediate attention, the request needed to address the emergency may be needlessly delayed by a lower priority request.

Therefore, what is needed in the art is a recognition that priorities exist for different types of data requests. Further, what is needed is a system and method for assigning priorities to data requests and minimizing data request obstructions.

An article entitled "Honeywell's Total Plant Solution Blends Open With Secure" by J.S. Gerold on pages 42-44 of Control Engineering International May 1996 discloses a client/server architecture.

An article entitled "Bussysteme in der Automatisierungstechnik" edition 2, by G Schnell, spring 1996, Fredr. Vieweg & Sohn Verlagsgesellschaft GmbH discloses a process control system for executing multiple threads.

### SUMMARY OF INVENTION

The present invention provides a process control system as defined in Claim 1 hereinafter.

The system may comprise the features of any one or more of dependent Claims 2 to 7.

The present invention also provides a method as defined in Claim 8 hereinafter.

The method may include the features of any one or more of dependent Claims 9 to 14.

An advantage of the present invention may be to provide a system and method for handling multiple types of data requests concurrently thereby to reduce obstruction of one request by another.

The present invention may provide, for use with a process control system having an operating system capable of executing multiple threads, a server for, and method of, concurrently processing multiple data object types to be associated with user applications executing on the process control system. The server includes an object defining module that creates multiple data object types for a particular user application on multiple threads when the particular user application is initiated, the operating system employing the multiple threads to process the multiple data object types concurrently.

The embodiment of the present invention to be illustrated and described is object-oriented. Thus, the user application and the data objects are expressed as a collection of interacting objects. The multi-threading capability of the underlying operating system is used to advantage by assigning each data object to a separate thread. The threads are prioritized such that the operating system can allocate processor resources to handle the objects (requests) concurrently. Only recently have operating systems been developed that contain the ability to process multiple object types on multiple threads.

In a preferred embodiment of the present invention, the multiple data object types are selected from the group consisting of: (1) a scan data object, (2) an immediate access object and (3) a history object. Objects in addition to these are within the scope of the present invention.

In a preferred embodiment of the present invention, the object defining module creates a build time object for the particular user application to allow the particular user application to interact with the process control system while the operating system builds the particular user application. As will be described, the build time object contains lists of external data variables that are to be used in fulfilling the requests made via the data objects.

In a preferred embodiment of the present invention, the process control system comprises a plurality of sensors and controllable devices and a data bus, the operating system communicating with the plurality of sensors and controllable devices via the data bus to process the multiple data object types. Thus, in this more specific embodiment, the sensors, controllable devices and data bus are provided in combination with the object defining module. However, those of skill in the art should recognize that the present invention in its broadest form does not require these auxiliaries to function.

In a preferred embodiment of the present invention, the process control system operates on real time data. Obstruction of requests is most disadvantageous in real time control system. However, the present invention in its broadest form is equally applicable in non-real time systems.

In a preferred embodiment of the present invention, the particular user application generates a visual presentation. the multiple data object types corresponding to data to be presented in the visual presentation. In a manner to be described, the visual presentation may contain a graphical representation of the facility being controlled. Symbols in the graphical representation correspond to components of the facility. Data objects associated with the symbols preferably relate data corresponding to the associated symbol.

In a preferred embodiment of the present invention, the server concurrently processes multiple data object types to be associated with at most four user applications. Of course, the broad form of the present invention is not so restricted in number.

In a preferred embodiment of the present invention, the operating system is Microsoft® Windows NT® and the multiple data object types are Component Object Model ("COM") objects. Of course, any operating system supporting object-oriented programming languages and multi-threading are within the broad scope of the present invention.

The foregoing has outlined rather broadly the features and technical advantages of the present invention so that those skilled in the art may better understand the detailed description of the invention that follows. Additional features and advantages of the invention will be described hereinafter that form the subject of the claims of the invention. Those skilled in the art should appreciate that they may readily use the conception and the specific embodiment disclosed as a basis for modifying or designing other structures for carrying out the same purposes of the present invention. Those skilled in the art should also realize that such equivalent constructions do not depart from the spirit and scope of the invention in its broadest form.

### BRIEF DESCRIPTION OF THE DRAWINGS

For a more complete understanding of the present invention, and the advantages thereof, reference is now made to the following descriptions taken in conjunction with the accompanying drawings, in which:
FIGURE 1 illustrates a block diagram of a process control system that provides an environment in which the present invention may be used;
FIGURE 2 illustrates a block diagram of the typical components employed in the physical modules of the plant control network of FIGURE 1;
FIGURE 3 illustrates a functional block diagram of a global universal station ("GUS") embodying a server constructed according to the principles of the present invention;
FIGURE 4 illustrates another functional block diagram of the GUS of FIGURE 3;
FIGURE 5 illustrates a representative architecture for an embodiment of a system constructed according to the principles of the present invention;
FIGURE 6 illustrates a functional block diagram of the build time object associated with the architecture of FIGURE 5;
FIGURE 7 illustrates a functional block diagram of the scan data object associated with the architecture of FIGURE 5;
FIGURE 8 illustrates a functional block diagram of the immediate access object associated with the architecture of FIGURE 5;
FIGURE 9 illustrates a functional block diagram of the history object associated with the architecture of FIGURE 5;
FIGURE 10 illustrates a functional block diagram of a thread model associated with the server of FIGURE 5; and
FIGURE 11 illustrates a booch diagram of a representative architecture for an embodiment of a system constructed according to the principles of the present invention.

### DETAILED DESCRIPTION

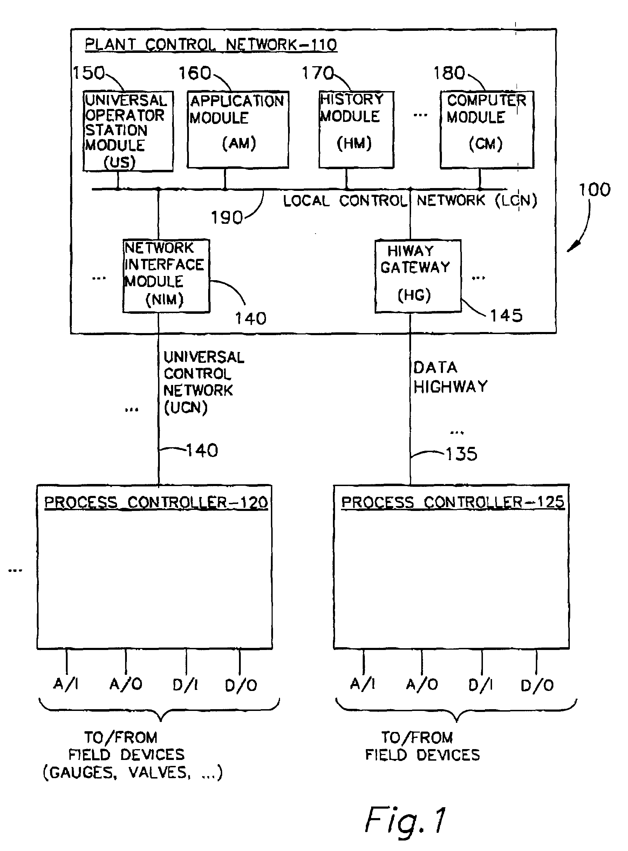

Before describing the system and method of the present invention, it will be helpful in understanding a system environment in which the present invention may be used. Accordingly, referring initially to FIGURE 1, illustrated is a block diagram of a process control system 100 that provides an environment in which the system and method of the present invention may be found. The process control system 100 includes a plant control network 110 coupled to a plurality of process controllers 120, 125 via a network interface module ("NIM") 140 and highway gateway ("HG") 145 over a universal control network ("UCN") 130 and data highway 135, respectively. Additional process controllers can be operatively connected to the plant control network 110, if so desired. The process controllers 120, 125 interface analog input and output signals and digital input and output signals ("A/I," "A/O," "D/I" and "D/O", respectively) to the process control system 100 from a variety of field devices (not shown) including valves, pressure switches, pressure gauges, thermocouples and the like.

The plant control network 110 provides the overall supervision of a controlled process in conjunction with the plant operator, and obtains all the information needed to perform the supervisory function, and includes an interface with the operator. The plant control network 110 includes a plurality of physical modules including, without limitation, a universal operator station module ("US") 150, an application module ("AM") 160, a history module ("HM") 170, a computer module ("CM") 180 and duplicates of these modules (and additional types of modules, not shown) as necessary to perform the required control/supervisory function of the process being controlled. Each of these physical modules is operatively connected to a local control network ("LCN") 190 that permits each of these modules to communicate with each other as necessary. The NIM 140 and HG 145 provide an interface between the LCN 190 and the UCN 130 and data highway 135, respectively.

Each of the physical modules 150, 160, 170, 180 of the plant control network 110 includes its own unique functionality. Furthermore, the physical modules 150, 160, 170, 180 are peers, or equivalents, of one another with equal access to the communication medium, or LCN 190, of the process control system 100 for the purpose of transmitting information therebetween.

The US 150 of the plant control network 110 is a workstation for one or more plant operators. It includes an operator console that is the interface between the plant operator, or operators. and the process or processes of the plant for which they are responsible. Each US 150 and any backup modules (not shown), for example, is connected to the LCN 190, and all communication between the US 150 and any other module (e.g., AM 160, HM 170, NIM 140) of the plant control network 110, including any backup modules (not shown) is by means of the LCN 190. The US 150 has access to data that are on the LCN 190 and the resources and data available through, or from, any of the other modules of the plant control network 110. Each US 150 includes a visual presentation including, for instance, a cathode ray tube display, designated CRT, that, in turn, includes a video display generator, an operator keyboard, a floppy disk data storage device, trend pen recorders and status displays, for example (not shown).

Another type of physical module included in the plant control network 110 is the HM 160 that provides mass data storage capability. Each HM 160 includes at least one conventional disk mass-storage device, such a Winchester disk, which disk mass-storage device provides a large volume of nonvolatile, nonremovable storage capability for binary data. The types of data stored by such mass storage device are typically trend histories or data from which such trends can be determined, data that constitute or form CRT-type displays, copies of programs for the units of the process controllers 120, 125 for the modules (*e.g.*, US 150, AM 160) or for units of the modules of the plant control network 110.

Another type of module incorporated into the plant control network 110 is the AM 160, The AM 160 provides additional data processing capability in support of the process control functions performed by the process controllers 120, 125, such as data acquisition, alarming, batch history collection and providing continuous control computational facilities when needed. The data processing capability of the AM 160 is provided by its module processor and module memory (not shown).

The CM 180 uses the standard or common units of all physical modules to permit a medium-to-large scale, general-purpose data processing system to communicate with other modules (*e.g.*, US 150, AM 160) of the plant control network 110 and the units of such modules over LCN 190 and the units of the process controllers 120, 125 via the NIM 140 or HG 145, respectively. Data processing systems of the CM 180 are used to provide supervision, optimization, generalized user program preparation and execution of such programs in higher-level program languages. Typically, the data processing systems of the CM 180 have the capability of communicating with other such systems by a communication processor and communication lines, as is well known in the art. The CM 180 can include one of several kinds of computers and operating systems. Honeywell DPS-6 computers, for instance, may be employed in the CM 180.

The LCN 190 of the present embodiment employs a high-speed, bit serial dual redundant communication bus that interconnects all the modules *(e.g.,* US 150, AM 160) of the plant control network 110. The LCN 190 provides the only data transfer path between the principal sources of data, such as the NIM 140, HG 145, AM 160 and HM 170 and the principal users of such data. such as the US 150, AM 160 and CM 180. The LCN 190 also provides the communication medium over which large blocks of data, such as memory images, can be moved from one module, such as HM 170, to another, such as US 150.

Each of the physical modules *(e.g.,* US 150, AM 160) of the plant control network 110 of the present embodiment includes certain, or required, standard units. a more complete description of the plant control network 110 and the physical modules can be had by reference to U.S. Patent Nos. 5,333,298 and 5,386,503.

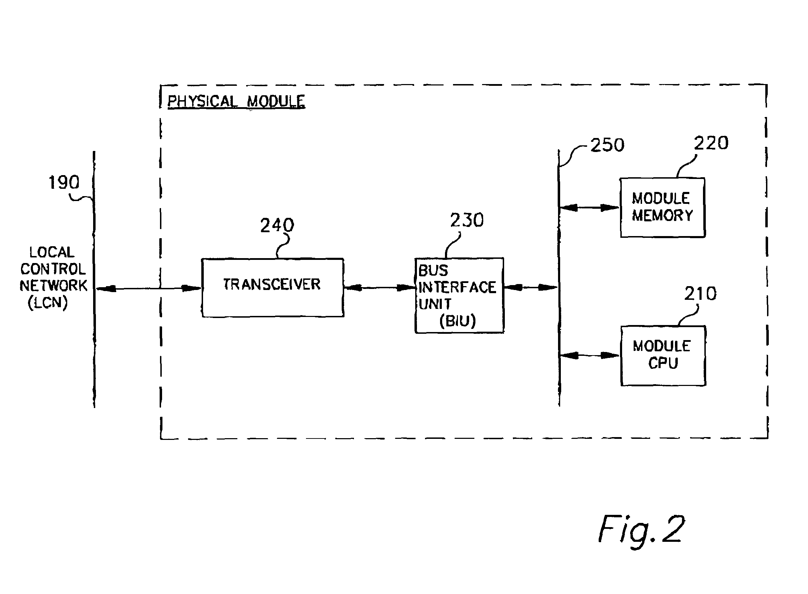

Turning now to FIGURE 2, illustrated is a block diagram of the typical components employed in the physical modules *(e.g.,* US 150) of the plant control network 110 of FIGURE 1. The modules generally include a central processing unit ("CPU") 210, main memory 220, random-access memory ("RAM") (not shown) and additional controller devices employed to accommodate the unique functionality of each module. The data processing capabilities of the physical modules, through the CPU 210 and main memory 220, create a distributed processing environment thereby providing improved reliability and performance for the process control system 100. The improved performance is a result of the higher throughput and faster operator response times associated with an increase in computer processor resources and the concurrency and parallelism of the data processing capabilities of the process control system 100. Additionally, the improved reliability is a product of the redundancy distributed throughout the process control system 100.

Each physical module also includes a bus interface unit ("BIU") 230 that is connected to the LCN 190 by a transceiver 240. The BIU 230 initiates the transfer of information over the LCN 190. Each physical module further includes a module bus 250 for communicating information between components *(e.g.,* between the CPU 210 and memory 220) within the physical module. Additional components employed to satisfy the unique functionality of each physical module are coupled to the module bus 250.

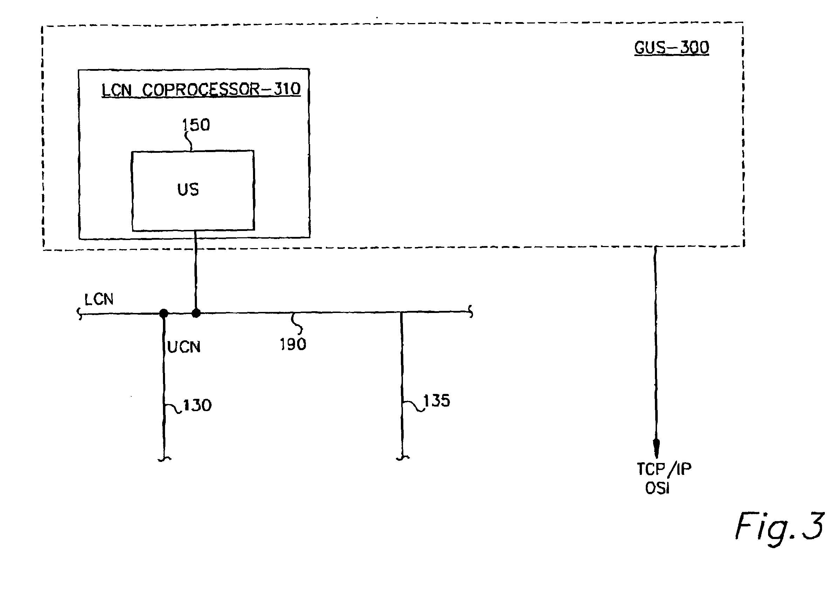

Turning now to FIGURE 3, illustrated is a functional block diagram of a global universal station ("GUS") 300 embodying a server constructed according to the principles of the present invention. The GUS 300 includes an LCN co-processor 310 comprising the US 150 as described with respect to FIGURE 1. The GUS 150 is coupled to the process control system 100 through the LCN 190. The GUS 300 includes a graphical interface thereby providing a visual presentation of the information within the process control system 100. The GUS 300 also contains a personal computer network interface such as, without limitation, task control program/interface protocol ("TCP/IP") and open system interface ("OSI"). The GUS 300 illustrated in the present embodiment is a personal computer such as a Motorola® PowerPC® executing a Microsoft® Windows NT® operating system. Those skilled in the art should understand that other processing systems operating on the same or other operating systems are well within the broad scope of the present invention.

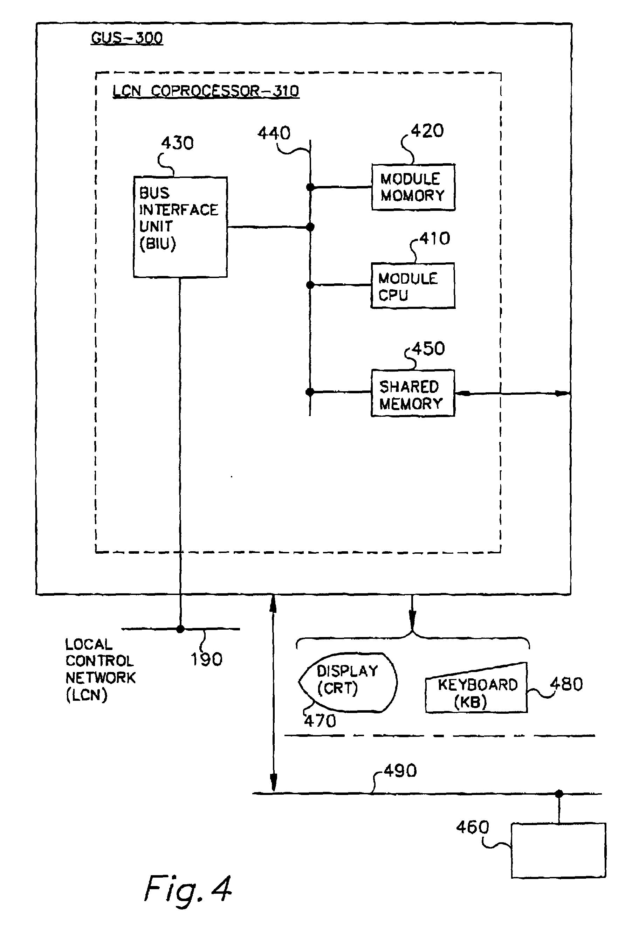

Turning now to FIGURE 4, illustrated is another functional block diagram of the GUS 300 of FIGURE 3. Again, the GUS 300 includes the LCN co-processor 310 as previously described. The LCN co-processor 310 includes a module CPU 410, module memory 420 and a BIU 430 coupled to a module bus 440. Additionally, the LCN co-processor 310 includes a shared memory 450, coupled to the module bus 440, for providing communication between the LCN co-processor 310 and the GUS 300 (thereby providing communication to the process control system 100 via the BIU 430 through the LCN 190). The GUS 300 also includes a CRT display 470 and keyboard 480 *(i.e.,* the graphical interface) thereby providing a visual presentation of the information within the process control system 100. The GUS 300 is further coupled to another communications network (*e.g*., a computer network) 490, through a standard computer network interface, having a co-processor 460 coupled thereto.

Conventional computer, and processing, system architecture is more fully discussed in Computer Organization and Architecture, by William Stallings, MacMillan Publishing Co. (3rd ed. 1993). Conventional processing system network design is more fully discussed in Data Network Design, by Darren L. Spohn, McGraw-Hill, Inc. (1993). Conventional data communications is more fully discussed in Data Communications Principles, by R. D. Gitlin, J. F. Hayes and S. B. Weinstein, Plenum Press (1992) and in The Irwin Handbook of Telecommunications, by James Harry Green, Irwin Professional Publishing (2nd ed. 1992). Each of the foregoing publications is incorporated herein by reference.

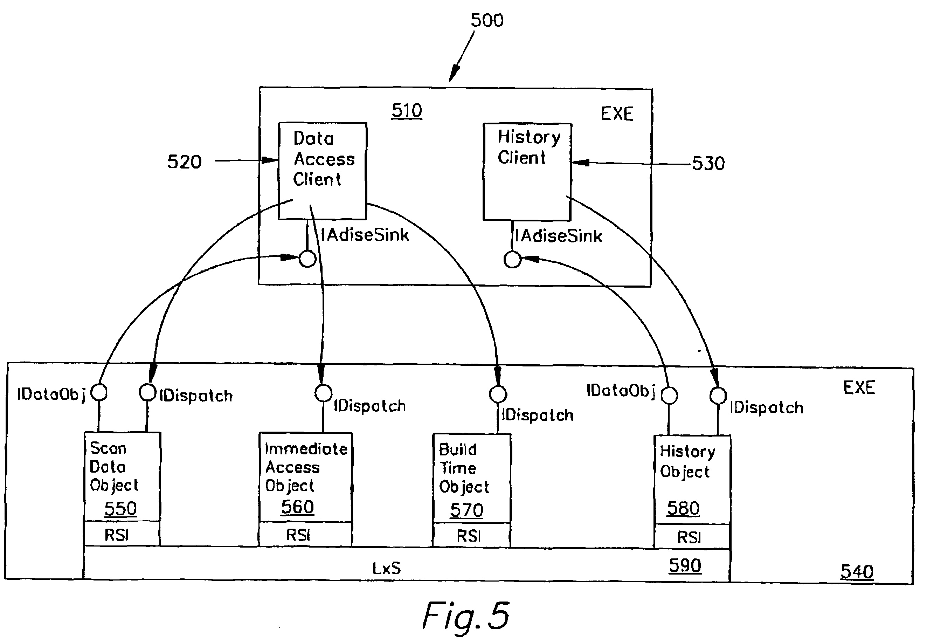

Turning now to FIGURE 5, illustrated is a representative architecture 500 for an embodiment of a system constructed according to the principles of the present invention. The present invention, generally, provides a system and method for handling multiple types of data requests concurrently thereby to reduce obstruction of one request by another. More specifically, in an environment of a process control system (as illustrated in FIGURE 1) having an operating system *(e.g.,* Microsoft® Windows NT® version 3.5.1, or a later version thereof, commercially available from Microsoft® Corporation of Seattle, Washington) capable of executing multiple threads, the present invention provides a server (generally embodied within the GUS 300 as illustrated in FIGURE 4) that concurrently processes multiple data object types to be associated with user applications executing on the process control system. The server includes an object defining module that creates (or "instantiates") multiple data object types for a particular user application on multiple threads when the particular user application is initiated. Because the multiple data object types are instantiated on multiple threads (instead of on the same thread), the operating system is free to process the multiple data object types concurrently whenever possible.

The architecture 500 as described herein most preferably is an object-oriented model. Thus, the user application and the data objects are expressed as a collection of interacting objects. The multi-threading capability of the underlying operating system is used to advantage by assigning each data object to a separate thread. The threads are prioritized such that the operating system can allocate processor resources to handle the objects (requests or commands) concurrently. The server employs a "class factory" to define and instantiate the data objects; one of the parameters that the class factory employs to instantiate an object is the thread priority [for a better understanding of the term "class factory" see the Component Object Module ("COM") specification as hereinafter introduced].

With continuing reference to the preceding FIGUREs, the architecture 500 includes a GUS subsystem (embodied within the GUS 300 or the co-processor 460 as illustrated in FIGURE 4) 510 including a data access client *520* and a history client 530, and a LCN Component Object Module ("COM") automation data server or server 540 which runs in a separate process in the GUS 300 as illustrated in FIGURE 4. For a better understanding of the COM concept see "Microsoft® Development Library Component Object Module (COM) Specification" developed by the Microsoft® Corporation of Seattle, Washington as herein incorporated by reference. The GUS subsystem 510 covers both runtime and build time access to the server 540. The server contains the COM objects that enable connection to the LCN 190. The server 540, in the present embodiment, is based upon two fundamental concepts, namely, COM automation and Uniform Data Transfer ("UDT") using COM data objects. Automation is used by the data access client 520 to make specific requests from the server 540. These requests include runtime access of individual data parameters (read and store) and build time access for reading parameter types and adding parameters into the data access tables. The parameters in the data access tables are used to determine which data periodically to scan from the LCN 190. The scan data from the LCN 190 are transferred from the server 540 to the data access client 520 through UDT.

The data access client 520 provides an interface between the GUS subsystem 510 and the server 540. The data access client 520 contains a cached copy of all of the data that are being accessed by the server 540 for update purposes; the GUS subsystem 510 accesses the data that are contained in the local copy of the data access client 520. The data access client 520 also provides an interface for the visual presentation of the GUS subsystem 510 to store data to the LCN 190 and read data from the LCN 190 contained in the cached copy. The data access client 520 communicates with the server 540 to perform any requested operations. The interaction between the GUS subsystem 510 and the server 540 is performed (in the illustrated embodiment) by employing a distributed component object module ("DCOM"; see the COM specification previously mentioned).

Another function of the data access client 520 is to provide the interfaces required for build time access by the GUS subsystem 510. The history client 530 also provides an interface between the GUS subsystem 510 and the server 540. The history client 530 provides several functions including, without limitation, initializing, sampling, updating, setting source and destination addresses and adding or deleting specific traces regarding trend data in the process control system 100.

The server 540 includes a scan data object 550, immediate access object 560, build time access object 570 and history object 580. Again, one of the purposes of the server 540, according to the principles of the present invention, is to provide data to the GUS subsystem 510. For the purposes of the present embodiment, three types of data are to be provided to the GUS subsystem 510. These are: scan data, immediate data and history and trend data. As previously mentioned, scan data are periodically and routinely read by the GUS subsystem 510; trend data are historical data employed to assess trends in the operation of a particular parameter; immediate data are specific commands or demands by the GUS subsystem 510.

The system of the present invention establishes priorities for the specific data types depending on a particular user application and, then, the server 540 employs an object defining module that creates multiple data object types for the particular user application on multiple threads of the underlying operating system when the particular user application is initiated. The scan data object 550, immediate access object 560 and history object 580 corresponding to the scan data, immediate data and trend data, respectively, are for runtime access to the LCN 190. The fourth object, the build time access object 570, is for build time access to the LCN 190. The build time access object 570 for a particular user application allows the particular user application to interact with the process control system 100 while the operating system builds the particular user application. When a visual presentation application is built into the GUS subsystem 510, the information necessary to access the LCN 190 is built into the visual presentation. The information is compiled and saved along with the visual presentation as a file on a system disk associated with the local personal computer. When the visual presentation is loaded for runtime display by the GUS subsystem 510, the information for accessing the data are loaded into the appropriate access object.

In the server 540, each of the objects executes its operating code on a separate thread of execution to prevent the blocking of another object being excited by the server 540. The scan data object 550 and history data object 580 concurrently pass requests to the LCN 190 for data and, thereafter, continue with the next request. The scan data object 550 and history data object 580 do not wait for a reply from the LCN 190. A separate thread runs on the server 540 to retrieve data back from the LCN 190. When the data are retrieved, they are automatically passed to the appropriate object. In contrast, the immediate access object 560 awaits for a reply from the LCN 190 for all accesses. Again, the objects on the data servers are standard COM data objects with each object created on a separate thread.

The server 540 may concurrently support multiple GUS subsystems 510 *(e.g.,* associated with four user applications). For each GUS subsystem 510 a set of objects is created. Therefore, in a process control system 100 with four GUS subsystems 510, four scan data objects 550, four immediate access objects 560 and as many history data objects 580 as necessary are created. A variable number of history data objects 580 may be created because one history data object 580 is created for each trend data being displayed and multiple trends may be illustrated in one visual presentation. In the illustrated embodiment, the maximum number of trends on the GUS subsystem 510 is limited to sixteen and the sixteen trends may be displayed in a single visual presentation or dispersed about several visual presentations.

A typical negotiation between the GUS subsystem 510 and the server 540 (in the illustrated embodiment) occurs according to the COM specification. Further, when the server 540 performs an operation, an LCN access layer 590 (associated with the server 540) requests the operation through the shared memory 450 and the module CPU 410 (of the GUS 300 of FIGURE 4) to obtain the necessary information from the LCN 190 (via the BIU 430).

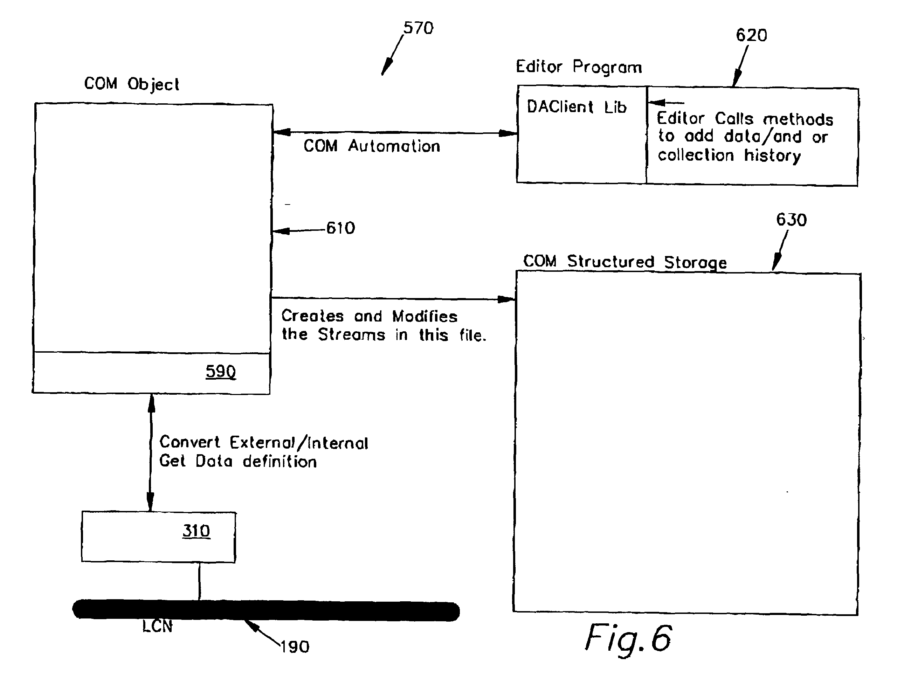

Turning now to FIGURE 6, illustrated is a functional block diagram of the build time object 570 associated with the architecture 500 of FIGURE 5. With continuing reference to the preceding FIGUREs, the build time object 570 manages all interactions (including graphical interactions associated with the visual presentation) within the server 540. The build time object 570 includes a COM object 610, an editor program 620 and a COM structured storage 630. The build time object 570 communicates with the LCN co-processor 310 through the LCN access layer 590. The LCN co-processor 310 is coupled to the LCN 190 as described with respect to FIGURE 3.

The editor program 620 builds a series of references pertaining to data within the process control network 100 to be employed by the scan data object 550, immediate access object 560 and history object 580. The COM object 610 performs the tasks assigned by the editor program 620 such as, without limitation. loading and saving string names, compiling information, adding or deleting names pertaining to data and setting, formatting and collecting information. The COM structured storage 630 contains subdirectories of information created and modified by the COM object 610 The physical module block 640 converts data and transmits information to and receives information from the LCN 190.

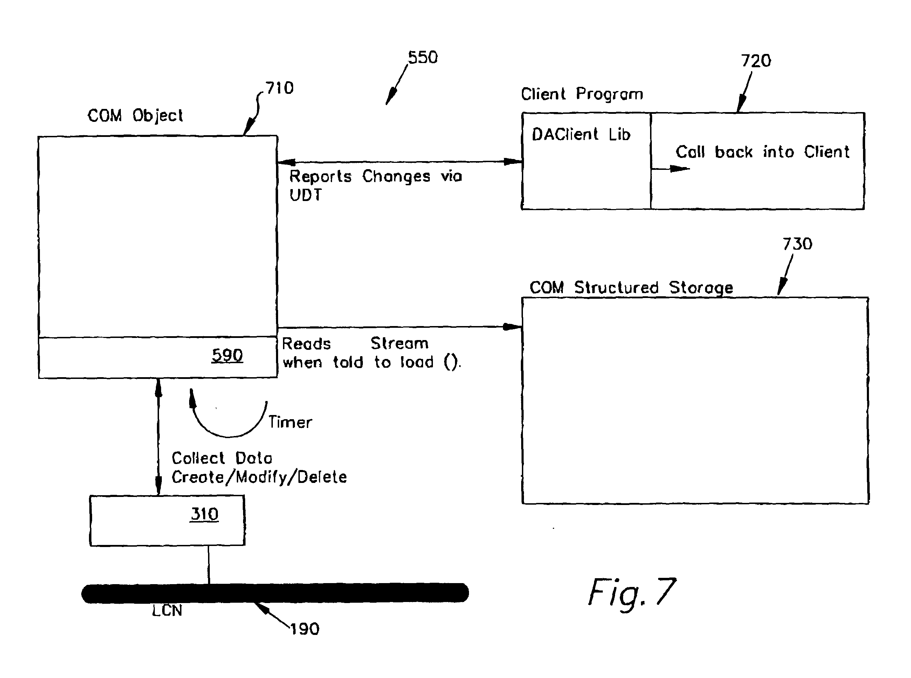

Turning now to FIGURE 7. illustrated is a functional block diagram of the scan data object 550 associated with the architecture 500 of FIGURE 5. With continuing reference to the preceding FIGUREs, the scan data object 550 manages all interactions with the LCN 190 for the scan data including any commands that deal with the scan data. The scan data object 550 includes a COM object 710. a client program 720 and an COM structured storage 730. The scan data object 550 communicates with the LCN co-processor 310 through the LCN access layer 590. The LCN co-processor 310 is coupled to the LCN 190 as described with respect to FIGURE 3.

The client program 720 employs the references assembled by the editor program 620 of the build time object 570 in an asynchronous process for the purpose of processing scan data for display on the visual presentation associated with the GUS subsystem 510. The COM object 710 reports changes in the scan data via UDT. The COM object 710 performs the tasks assigned by the client program 720 such as, without limitation, loading string names, setting the update rate, acknowledging information and setting collection of information. The COM structured storage 730 contains subdirectories of information created and modified by the COM object 710. The physical module block 740 converts data and transmits information to and receives information from the LCN 190.

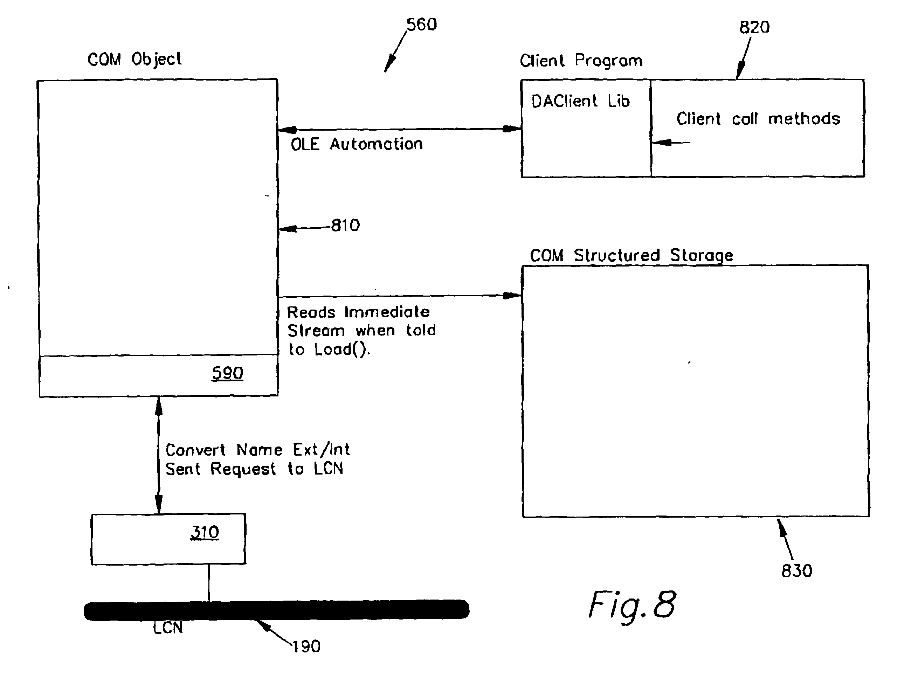

Turning now to FIGURE 8, illustrated is a functional block diagram of the immediate access object 560 associated with the architecture 500 of FIGURE 5. With continuing reference to the preceding FIGURES, the immediate access object 550 manages all interactions with the LCN 190 for the immediate data. In accordance therewith, the immediate access object 560 provides for immediate access to the most current value of the database values or specific values for the LCN 190. Additionally, the immediate access object 560 provides functions such as, without limitation, copy of database values from the source to the destination database. Analogous to the scan data object 550 of FIGURE 7, the immediate access object 560 includes an COM object 810, a client program 820 and a COM structured storage 830. The immediate access object 560 communicates with the LCN co-processor 310 through the LCN access layer 590. The LCN co-processor 310 is coupled to the LCN 190 as described with respect to FIGURE 3.

The client program 820 employs the references assembled by the editor program 620 of the build time object 570 in an synchronous process for the purpose of processing immediate data for display on the visual presentation associated with the GUS subsystem 510. The client program 820 reports the immediate data on a request basis from the direct access client 520 typically for immediate action by the GUS subsystem 510. The COM object 810 performs the tasks assigned by the client program 820 such as, without limitation, loading string names, getting and storing system data, sending display information and getting and storing database information. The COM structured storage 830 contains subdirectories of information created and modified by the COM object 810. The physical module block 840 converts data and transmits information to and receives information from the LCN 190.

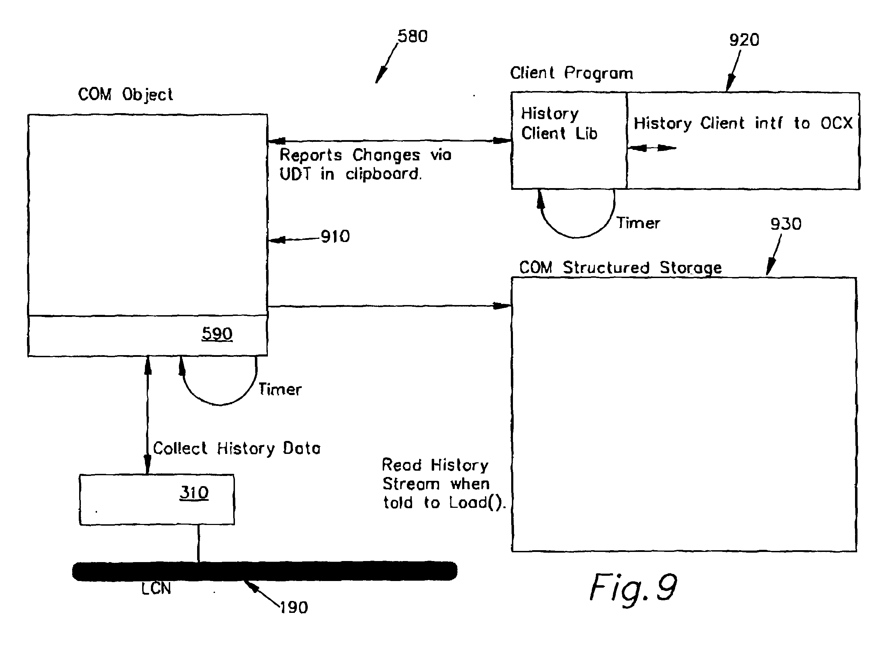

Turning now to FIGURE 9, illustrated is a functional block diagram of the history object 580 associated with the architecture 500 of FIGURE 5. With continuing reference to the preceding FIGUREs, the history object 580 manages all interactions with the LCN 190 for the trend data including adding or deleting traces to a trend and reporting of history collected in connection therewith. Analogous to the scan data object 550 of FIGURE 7, the history object 580 includes a COM object 910, a client program 920 and an COM structured storage 930. The history object 580 communicates with the LCN co-processor 310 through the LCN access layer 590. The LCN co-processor 310 is coupled to the LCN 190 as described with respect to FIGURE 3.

The client program 920 employs the references assembled by the editor program 620 of the build time object 570 in an asynchronous process for the purpose of processing trend data for display on the visual presentation associated with the GUS subsystem 710. The client program 920 reports all the trend data associated with a specific parameter in the process control system 100. The COM object 910 performs the tasks assigned by the client program 920 such as, without limitation, loading string names, setting an update rate, setting a time base, setting a trace source and getting a number of traces. The COM structured storage 930 contains subdirectories of information created and modified by the COM object 910. The physical module block 940 converts data and transmits information to and receives information from the LCN 190.

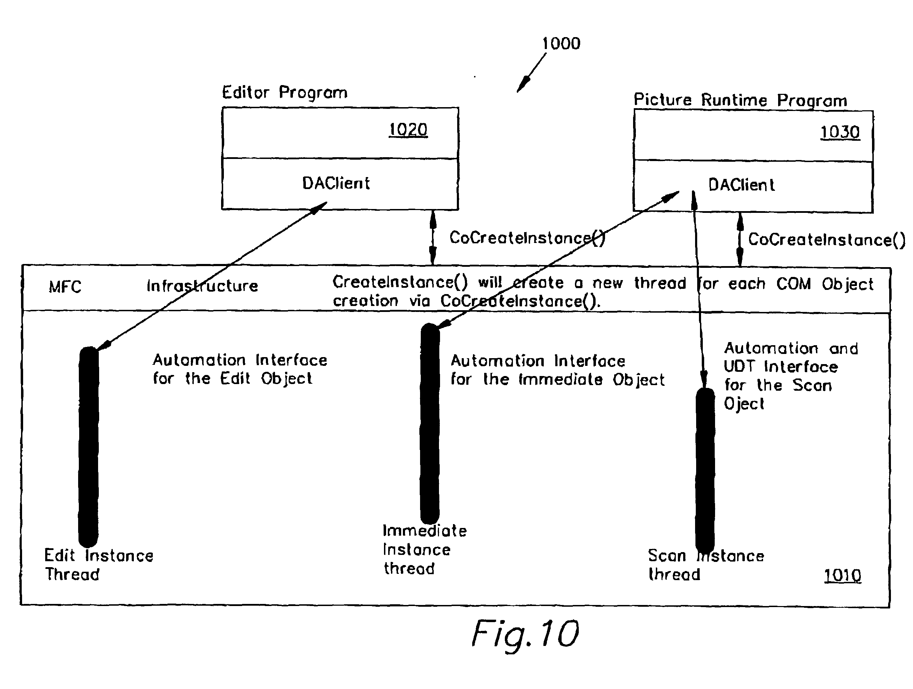

Turning now to FIGURE 10, illustrated is a functional block diagram of a thread model 1000 associated with the server 540 of FIGURE 5. The thread model 1000 includes a Microsoft® Foundation Class Library ("MFC") infrastructure 1010, an editor program 1020 and a visual presentation runtime program 1030. The data access client 520 interacts with the threads via the editor program 1020 and visual presentation runtime program 1030. While no particular client is illustrated in the present embodiment, the client could be the GUS subsystem 510 operating in the build time or runtime mode.

The individual COM objects *(e.g.,* scan data object 550) of the server 540 initiate their own threads. The scan data and history data objects 550, 580, respectively, endure an additional burden of connecting to an available data retrieval thread. The methods that support this connection may be implemented in an application object of the executable. The base threads of the thread model 1000 are the data retrieval threads for scan and history data retrieval. When the server 540 is started, a value representing the number of data retrieval threads is initiated and the number of any class of COM objects is limited to that value. The data retrieval threads include a set of threads for responses for the scan data and another set of threads for responses for the history collection. The retrieval threads know which thread to send the response on by looking at the header of the data packet carrying the data. A portion of the request message header is maintained by the LCN task thereby making the connection to the requesting thread possible.

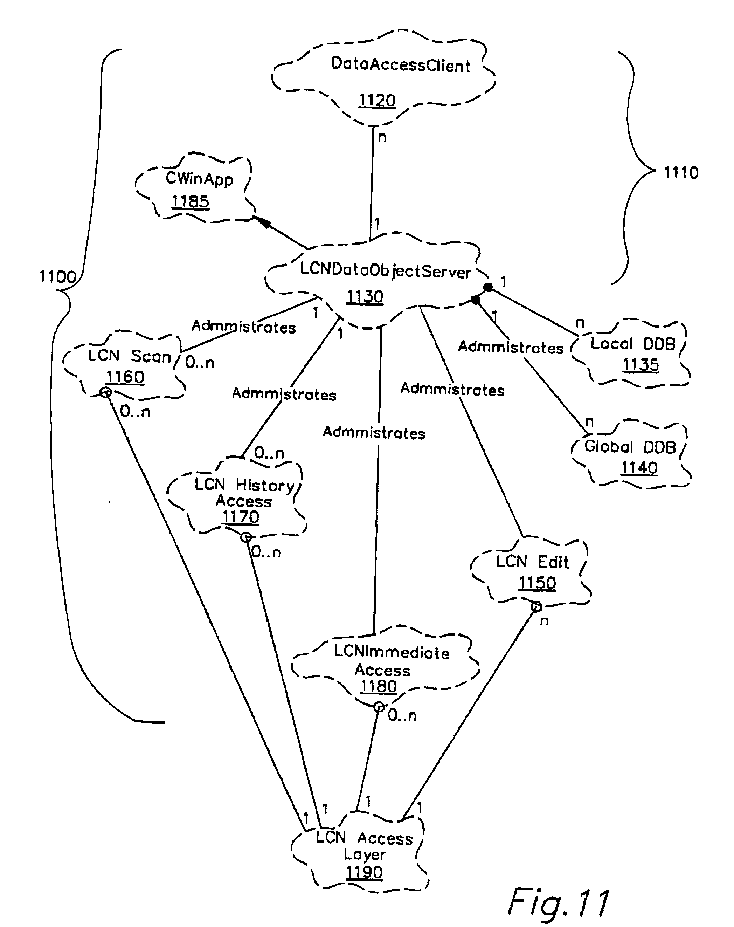

Turning now to FIGURE 11, illustrated is a booch diagram of a representative architecture 1100 for an embodiment of a system constructed according to the principles of the present invention. Analogous to the architecture 500 of FIGURE 5, the architecture 1100 includes a GUS subsystem 1110, including a data access client 1120, and a LCN data object server or server 1130, coupled to a plurality of COM objects, that runs in a separate process. The server is coupled to a local and global database 1135, 1140, build time access object (designated "LCN edit") 1150, scan data object 1160, history object 1170, immediate access object 1180 and application object 1185. The architecture 1100 still further includes a LCN access layer 1190 for providing an interface to the LCN (not shown).

The following principles govern the operability of the architecture 1100. The functionality of the server 1130 is generally derived from the application object 1185. While the local and global databases 1135, 1140 are illustrated as coupled to the server 1130, the local and global databases 1135, 1140 are associated with the server 1130. The general operation of the architecture 1100 encompasses the server 1130 controlling the operation of the local and global databases 1135, 1140, build time access object 1150, scan data object 1160, history object 1170 and immediate access object 1180. In conjunction therewith, the build time access object 1150, scan data object 1160, history object 1170 and immediate access object 1180 employ the LCN access layer 1190 for interface purposes. Finally, the association between the number of COM objects is generally illustrated by the numbers and letters proximate each object.

The server 1130 is the main container for all of the LCN COM objects. There is typically one data object server running per GUS node although the data object server can support multiple GUS nodes (as demonstrated by a notation "n" proximate the data access client 1120 of the GUS subsystem 1110 and a notation "1" proximate the server 1130). The data access client 1120 makes a request to the server 1130 upon initialization to create an LCN COM automation data server or automation server. The server 1130 creates the automation server and returns a pointer to the data access client 1120. All further communication is then between the data access client 1120 and the automation server. The server 1130 is also responsible for managing a pool of global databases 1140. When the server 1130 creates a new automation server, the server 1130 indicates to the automation server object which global database 1140 to use.

The overall data transfer for real time data between the automation server and the data access client 1120 is preferably on a request-advise based system. The data access client 1120 accesses the exposed objects of the server using a variety of methods depending on the application. The data access client 1120 configures the LCN data objects as points are added during build time. In general, the names of the data to be collected or referenced are passed to the server 1130 during the configuration phase. The names are preferably unique and take a form that allows for data concentration or reuse of the same data item. Additionally, the data access client 1120 is preferably a COM container application that implements an interface indicating that it requires updates when data have changed. Also, the data access client 1120 implements the COM automation through a polling interface for accessing data that are not required for periodic updates. The data are necessary for target execution. When the GUS subsystem 1110 is executing a target routine, it may require data from the automation server as part of the execution of the target. The data are obtained through a method on the automation server that causes an immediate access of the data required.

In interacting with the automation server, the data access client 1120 compiles a list of names that conforms to a syntax. The list of names represent the condensed list of data items needed for execution of the dynamic portion of the visual presentation for the GUS subsystem 1110. A second list of data items necessary for target execution may also be maintained. The lists are employed to construct the information needed by the automation server at runtime. As names are added by the user at the visual presentation, the names are added to lists maintained in the automation server using the Add/Name method therein.

From the above, it is apparent that the present invention provides, for use with a process control system having an operating system capable of executing multiple threads, a server for, and method of, concurrently processing multiple data object types to be associated with user applications executing on the process control system. The server includes an object defining module that creates multiple data object types for a particular user application on multiple threads when the particular user application is initiated, the operating system employing the multiple threads to process the multiple data object types concurrently. While the functionality of the server and overall system and method of the present invention are embodied in software, those skilled in the art should understand that it may also be embodied in, without limitation, hardware or firmware.

## Claims

1. A process control system (100) having an operating system for executing multiple threads, a server (540) for concurrently processing multiple data objects to be associated with user applications executing on said process control system, the system **characterised by**:
an object defining module that creates multiple data objects (550, 560, 570, 580, 610) within a single data object type for a particular user application, each of said multiple data objects having a unique execution thread when said particular user application is initiated to allow said multiple data objects to be processed concurrently, said multiple data objects being Component Object Model ("COM") objects.

2. The system as recited in Claim 1 wherein said multiple data object types are selected from the group consisting of:
a scan data object (500),
an immediate access object (560), and
a history object (580).

3. The system as recited in Claim 1 wherein said object defining module creates a build time object (570) for said particular user application to allow said particular user application to interact with said process control system (100) while said operating system builds said particular user application.

4. The system as recited in Claim I wherein said process control system (100) comprises a plurality of sensors and controllable devices and a data bus (440), said operating system communicating with said plurality of sensors and controllable devices via said data bus to process said multiple data object types (550, 560, 570, 580, 610).

5. The system as recited in Claim 1 wherein said process control system (100) operates on real time data.

6. The system as recited in Claim 1 wherein said particular user application generates a visual presentation, said multiple data object types corresponding to data to be presented in said visual presentation.

7. The system as recited in Claim 1 wherein said operating system is Windows NT® and said multiple data object types are Component Object Model ("COM") objects.

8. A method for concurrently processing multiple data objects to be associated with user applications executing on a process control system (100) having an operating system for executing multiple threads the method **characterised by**:
creating multiple data objects (550, 560, 570, 580, 610) within a single data type for a particular user application, each of said multiple data objects having a unique execution thread when said particular user application is initiated; and
concurrently processing said multiple data objects, said multiple data objects being component Object Model ("COM") objects.

9. The method as recited in Claim 8 wherein said multiple data object types are selected from the group consisting of:
a scan data object (550),
an immediate access object, (560) and
a history object (580).

10. The method as recited in Claim 8 further comprising the step of creating a build time object (570) for said particular user application to allow said particular user application to interact with said process control system (100) while said operating system builds said particular user application.

11. The method as recited in Claim 8 wherein said process control system comprises a plurality of sensors and controllable devices and a data bus (440), said method further comprising the step of communicating with said plurality of sensors and controllable devices via said data bus to process said multiple data object types.

12. The method as recited in Claim 8 wherein said process control system (100) operates on real time.

13. The method as recited in Claim 8 further comprising the step of generating a visual presentation with said particular user application, said multiple data object types (550, 560, 570, 580, 610) corresponding to data to be presented in said visual presentation.

14. The method as recited in Claim 8 wherein said operating system is Windows NT® and said multiple data object types are Component Object Model ("COM") objects.

## Patentansprüche

1. Prozeßsteuersystem (100) mit einem Betriebssystem zur Ausführung mehrerer Threads, einem Server (540) zur gleichzeitigen Verarbeitung mehrerer Datenobjekte, die Benutzeranwendungen zugeordnet werden sollen, die auf dem Prozeßsteuersystem ablaufen, wobei das System durch folgendes **gekennzeichnet ist**:
ein Objektdefinitionsmodul, das mehrere Datenobjekte (550, 560, 570, 580, 610) in einem einzigen Datenobjekttyp für eine bestimmte Benutzeranwendung erzeugt, wobei jedes der mehreren Datenobjekte einen eindeutigen Ausführungs-Thread aufweist, wenn die bestimmte Benutzeranwendung eingeleitet wird, damit die mehreren Datenobjekte gleichzeitig verarbeitet werden können, wobei die mehreren Datenobjekte Objekte des Component Object Model ("COM") sind.

2. System nach Anspruch 1, wobei die mehreren Datenobjekttypen aus der folgenden Gruppe ausgewählt werden:
ein Scan-Datenobjekt (500),
ein Sofortzugriffsobjekt (560) und
ein Vorgeschichteobjekt (580).

3. System nach Anspruch 1, wobei das Objektdefinitionsmodul ein Aufbauzeitobjekt (570) für die bestimmte Benutzeranwendung erzeugt, damit die bestimmte Benutzeranwendung mit dem Prozeßsteuersystem (100) in Wechselwirkung treten kann, während das Betriebssystem die Benutzeranwendung aufbaut.

4. System nach Anspruch 1, wobei das Prozeßsteuersystem (100) mehrere Sensoren und steuerbare Einrichtungen und einen Datenbus (440) umfaßt, wobei das Betriebssystem über den Datenbus mit den mehreren Sensoren und den steuerbaren Einrichtungen kommuniziert, um die mehreren Datenobjekte (550, 560, 570, 580, 610) zu verarbeiten.

5. System nach Anspruch 1, wobei das Prozeßsteuersystem (100) mit Echtzeitdaten arbeitet.

6. System nach Anspruch 1, wobei die bestimmte Benutzeranwendung eine visuelle Darstellung erzeugt, wobei die mehreren Datenobjekttypen Daten entsprechen, die in der visuellen Darstellung angezeigt werden sollen.

7. System nach Anspruch 1, wobei das Betriebssystem Windows NT® ist und die mehreren Datenobjekttypen Objekte des Component Object Model ("COM") sind.

8. Verfahren zur gleichzeitigen Verarbeitung mehrerer Datenobjekte, die Benutzeranwendungen zugeordnet werden sollen, die auf einem Prozeßsteuersystem (100) mit einen Betriebssystem zur Ausführung mehrerer Threads ablaufen, mit den folgenden Schritten:
Erzeugen mehrerer Datenobjekte (550, 560, 570, 580, 610) in einem einzigen Datentyp für eine bestimmte Benutzeranwendung, wobei jedes der mehreren Datenobjekte einen eindeutigen Ausführungs-Thread aufweist, wenn die bestimmte Benutzeranwendung eingeleitet wird; und
gleichzeitiges Verarbeiten der mehreren Datenobjekte, wobei die mehreren Datenobjekte Objekte des Component Object Model ("COM") sind.

9. Verfahren nach Anspruch 8, wobei die mehreren Datenobjekttypen aus der folgenden Gruppe ausgewählt werden:
ein Scan-Datenobjekt (550),
ein Sofortzugriffsobjekt (560) und
ein Vorgeschichteobjekt (580).

10. Verfahren nach Anspruch 8, weiterhin mit dem Schritt des Erzeugens eines Aufbauzeitobjekts (570) für die bestimmte Benutzeranwendung, damit die bestimmte Benutzeranwendung mit dem Prozeßsteuersystem (100) in Wechselwirkung treten kann, während das Betriebssystem die Benutzeranwendung aufbaut.

11. Verfahren nach Anspruch 8, wobei das Prozeßsteuersystem (100) mehrere Sensoren und steuerbare Einrichtungen und einen Datenbus (440) umfaßt, wobei das Verfahren weiterhin den Schritt des Kommunzierens mit den mehreren Sensoren und den steuerbaren Einrichtungen über den Datenbus, um die mehreren Datenobjekttypen zu verarbeiten, umfaßt.

12. Verfahren nach Anspruch 8, wobei das Prozeßsteuersystem (100) mit Echtzeit arbeitet.

13. Verfahren nach Anspruch 8, weiterhin mit dem Schritt des Erzeugens einer visuellen Darstellung mit der bestimmten Benutzeranwendung, wobei die mehreren Datenobjekttypen (550, 560, 570, 580, 610) Daten entsprechen, die in der visuellen Darstellung angezeigt werden sollen.

14. Verfahren nach Anspruch 8, wobei das Betriebssystem Windows NT® ist und die mehreren Datenobjekttypen Objekte des Component Object Model ("COM") sind.

## Revendications

1. Système de commande de processus industriel (100) ayant un système d'exploitation pour exécuter des chemins multiples, un serveur (540) pour traiter simultanément des objets de données multiples à associer à des applications d'utilisateur exécutées sur ledit système de commande de processus industriel, le système étant **caractérisé par** :
un module de définition d'objets qui crée des objets de données multiples (550, 560, 570, 580, 610) au sein d'un même type d'objets de données pour une application d'utilisateur particulière, chacun desdits objets de données multiples ayant un chemin d'exécution unique quand ladite application d'utilisateur particulière est lancée pour permettre de traiter simultanément lesdits objets de données multiples, lesdits objets de données multiples étant des objets du Modèle d'Objets Constituants ("COM").

2. Système selon la revendication 1, dans lequel lesdits types d'objets de données multiples sont sélectionnés dans le groupe consistant en :
un objet de données de balayage (500),
un objet d'accès immédiat (560), et
un objet d'historique (580).

3. Système selon la revendication 1, dans lequel ledit module de définition d'objets crée un objet de temps de construction (570) pour ladite application d'utilisateur particulière pour permettre à ladite application d'utilisateur particulière d'interagir avec ledit système de commande de processus industriel (100) pendant que ledit système d'exploitation construit ladite application d'utilisateur particulière.

4. Système selon la revendication 1, dans lequel ledit système de commande de processus industriel (100) comprend une pluralité de capteurs et de dispositifs contrôlables et un bus de données (440), ledit système d'exploitation communiquant avec ladite pluralité de capteurs et de dispositifs contrôlables par l'intermédiaire dudit bus de données en vue de traiter lesdits types d'objets de données multiples (550, 560, 570, 580, 610).

5. Système selon la revendication 1, dans lequel ledit système de commande de processus industriel (100) fonctionne sur des données en temps réel.

6. Système selon la revendication 1, dans lequel ladite application d'utilisateur particulière génère une présentation visuelle, lesdits types d'objets de données multiples correspondants aux données à présenter dans ladite présentation visuelle.

7. Système selon la revendication 1, dans lequel ledit système d'exploitation est Windows NT® et lesdits types d'objets de données multiples sont des objets du Modèle d'Objets Constituants ("COM").

8. Procédé pour traiter simultanément des objets de données multiples à associer à des applications d'utilisateur exécutées sur ledit système de commande de processus industriel (100) ayant un système d'exploitation pour exécuter des chemins multiples, le procédé étant **caractérisé par** :
la création d'objets de données multiples (550, 560, 570, 580, 610) au sein d'un même type d'objets de données pour une application d'utilisateur particulière, chacun desdits objets de données multiples ayant un chemin d'exécution unique quand ladite application d'utilisateur particulière est lancée ; et
le traitement simultané desdits objets de données multiples, lesdits objets de données multiples étant des objets du Modèle d'Objets Constituants ("COM").

9. Procédé selon la revendication 8, dans lequel lesdits types d'objets de données multiples sont sélectionnés dans le groupe consistant en :
un objet de données de balayage (550),
un objet d'accès immédiat (560), et
un objet d'historique (580).

10. Procédé selon la revendication 8, comprenant en outre l'étape de création d'un objet de temps de construction (570) pour ladite application d'utilisateur particulière pour permettre à ladite application d'utilisateur particulière d'interagir avec ledit système de commande de processus industriel (100) pendant que ledit système d'exploitation construit ladite application d'utilisateur particulière.

11. Procédé selon la revendication 8, dans lequel ledit système de commande de processus industriel comprend une pluralité de capteurs et de dispositifs contrôlables et un bus de données (440), ledit procédé comprenant en outre l'étape de communication avec ladite pluralité de capteurs et de dispositifs contrôlables par l'intermédiaire dudit bus de données en vue de traiter lesdits types d'objets de données multiples.

12. Procédé selon la revendication 8, dans lequel ledit système de commande de processus industriel (100) fonctionne en temps réel.

13. Procédé selon la revendication 8, comprenant en outre l'étape de génération d'une présentation visuelle avec ladite application d'utilisateur particulière, lesdits types d'objets de données multiples (550, 560, 570, 580, 610) correspondants aux données à présenter dans ladite présentation visuelle.

14. Procédé selon la revendication 8, dans lequel ledit système d'exploitation est Windows NT® et lesdits types d'objets de données multiples sont des objets du Modèle d'Objets Constituants ("COM").
